# EUROPÄISCHE PATENTSCHRIFT

(11) **EP 2 195 218 B1**
(45) Veröffentlichungstag und Bekanntmachung des Hinweises auf die Patenterteilung: **13.07.2011**
(21) Anmeldenummer: 08802704.0
(22) Anmeldetag: 29.09.2008
(51) Int. Cl.: B60T 13/74, F16D 65/14, F16H 25/22

(54) **KUGELGEWINDETRIEB FÜR EINE KRAFTFAHRZEUGBREMSE UND KRAFTFAHRZEUGBREMSE**
BALL SCREW FOR A MOTOR VEHICLE BRAKE AND MOTOR VEHICLE BRAKE
VIS D'ENTRAÎNEMENT À BILLES POUR UN FREIN DE VÉHICULE À MOTEUR ET FREIN DE VÉHICULE À MOTEUR

(30) Priorität: 01.10.2007 DE 102007046953
(43) Veröffentlichungstag der Anmeldung: 16.06.2010
(73) Patentinhaber: Lucas Automotive GmbH, 56070 Koblenz (DE)
(72) Erfinder: GIERING, Wilfried, 56743 Mendig (DE); OHLIG, Benedikt, 56179 Vallendar (DE)
(74) Vertreter: Thum, Bernhard
(86) Internationale Anmeldenummer: PCT/EP2008/008275
(87) Internationale Veröffentlichungsnummer: WO 2009/046899

(56) Entgegenhaltungen:
- DE-A1- 10 233 938
- DE-A1- 19 944 876
- DE-C1- 19 731 626
- JP-A- 54 120 366

## Beschreibung

Die vorliegende Erfindung betrifft einen Kugelgewindetrieb für eine Kraftfahrzeugbremse, insbesondere für eine elektromechanisch betätigbare Kraftfahrzeugbremse, mit einer drehantreibbaren Spindel, einer nach Maßgabe des Drehantriebs der Spindel relativ zu dieser axial beweglichen Mutter und einer Wälzkörperanordnung, die zwischen der Spindel und der Mutter angeordnet und relativ zu diesen verlagerbar ist.

Aus dem Stand der Technik sind verschiedenartige Kraftfahrzeugbremsen bekannt. So gibt es übliche Kraftfahrzeugbremsen, bei denen Bremsbeläge über ein Hydrauliksystem verlagert werden, so dass sie an einer mit einem Rad mitdrehenden Bremsscheibe angreifen und in Abhängigkeit von dem angelegten Hydraulikdruck einen mehr oder weniger starken Bremseffekt erzielen. Neben derartigen hydraulisch betätigbaren Kraftfahrzeugbremsen existieren im Stand der Technik rein elektromechanisch betätigbare Kraftfahrzeugbremsen, bei denen die Bremsbeläge durch einen elektromechanischen Antrieb, insbesondere unter Verwendung eines Elektromotors verlagerbar sind. Derartige Bremsen haben den Vorteil, dass für deren Ansteuerung kein aufwendiges Hydrauliksystem erforderlich ist, sondern dass stattdessen die Bordelektronik des Fahrzeugs verwendet werden kann, zum das Bremssystem anzusteuern.

Der Stand der Technik gemäß DE 101 26 556 zeigt eine derartige elektromechanisch betätigbare Fahrzeugbremse, bei der ein Bremsbelag, der in einer Schwimmsattelanordnung in herkömmlicher Weise angeordnet ist, über einen Kugel-Rampen-Mechanismus verlagert werden kann, um so einen Bremseffekt zu erzielen.

Ferner zeigt der Stand der Technik gemäß DE 195 11 287 eine elektromechanisch betätigbare Scheibenbremse des Schwimmsatteltyps, bei dem der relativ zum Gehäuse verlagerbare Bremsbelag mittels einer Spindel-Mutter-Anordnung verlagerbar ist. Zwischen der Spindel und der Mutter sind Gewinderollen angeordnet, die als Wälzkörper wirken und zusammen mit der Spindel und der Mutter einen Rollengewindetrieb bilden.

Als weiterer Stand der Technik ist auf das Dokument DE 198 35 550 A1 zu verweisen.

Dokument DE 197 31 626 C1 offenbart einen Kugelgewindetrieb nach dem Oberbegriff des Anspruchs 1.

Der Erfindung liegt die Aufgabe zugrunde, einen Kugelgewindetrieb der eingangs bezeichneten Art bereitzustellen, der bei einfachem und kostengünstigem Aufbau nur wenig Bauraum benötigt und selbst bei einem Verschleiß der Bremsbeläge zuverlässig in eine vorbestimmte Ausgangsstellung bei nichtbetätigter Bremse zurückkehrt.

Diese Aufgabe wird durch einen Kugelgewindetrieb der eingangs bezeichneten Art gelöst, wobei vorgesehen ist, dass die Wälzkörperanordnung über wenigstens ein außerhalb der Wälzkörperanordnung angeordnetes Federelement in eine vorbestimmte Ausgangsstellung vorgespannt ist.

Das wenigstens eine Federelement ist innerhalb der Spindel angeordnet und einenends an dieser festgelegt. Dies sorgt insbesondere im Zusammenhang mit der Verwendung eines buchsenartig ausgebildeten Druckstücks gemäß vorstehender Schilderung für eine besonders kompakte Ausgestaltung des erfindungsgemäßen Kugelgewindetriebs.

Durch Verwendung eines Kugelgewindetriebs, bei dem die Wälzkörperanordnung über wenigstens ein Federelement in eine vorbestimmte Ausgangsstellung vorgespannt ist, lässt sich erreichen, dass beim Zuspannen der Bremse der Kugelgewindetrieb in herkömmlicher Weise funktioniert, wobei über den elektromechanischen Antrieb auch noch die Spannkraft der Feder überwunden werden muss. Bekanntermaßen vollzieht aber die Wälzkörperanordnung bei einem Drehantrieb der Spindel nur eine Relatiwerdrehung zur Spindel und zur Mutter, die etwa der Hälfte des Ausmaßes der Relatiwerdrehung zwischen Spindel und Mutter entspricht. Dementsprechend ist auch das Ausmaß der Axialbewegung der Wälzkörperanordnung relativ zu der Spindel erheblich kleiner, als das der Axialbewegung der Mutter relativ zur Spindel. Wird beispielsweise die Spindel um 10° verdreht, um eine bestimmte Axialbewegung der Mutter zu erreichen, die eine bestimmte Bremswirkung erzielt, so wird die Wälzkörperanordnung lediglich um etwa 5° verdreht und bewegt sich infolgedessen auch nur um einen entsprechend kleineren Weg in axialer Richtung. Während dieser Axialverlagerung der Wälzkörperanordnung wird das Federelement ausgehend von seinem bereits vorgespannten Zustand weiter gespannt. Sobald der Bremsvorgang beendet wird und die Spindel durch den elektromechanischen Antrieb zurückgedreht wird, wird diese Bewegung durch das Federelement unterstützt.

Neben der vorstehend geschilderten Wirkungsweise der Bremse und in diesem Zusammenhang des erfindungsgemäßen Kugelgewindetriebs während einer Betriebsbremsung besteht ein wesentlicher Aspekt der Erfindung darin, die Bremse auch zu einer Herbeiführung eines Feststellbremszustands zu nutzen. Hierfür wird wiederum die Bremse elektromechanisch betätigt, wie im vorstehend geschilderten Fall einer Betriebsbremsung. Jedoch wird bei Erreichen einer bestimmten Spannkraft an der Bremsscheibe die Anordnung blockiert, beispielsweise durch Festlegen der Spindel mittels einer Blockiereinrichtung, so dass die Spannkraft, abgesehen von bestimmten Setzverlusten im Wesentlichen aufrechterhalten wird. Wird der Feststellbremszustand später aufgehoben, beispielsweise dadurch, dass die Blockiereinrichtung gelöst wird, so bewegt sich der Kugelgewindetrieb aufgrund des gespannten Zustands des Federelements selbsttätig in seine Ausgangsstellung zurück, sobald sich der Kugelgewindetrieb im lastfreien Zustand befindet. Dadurch kann gewährleistet werden, dass selbst bei zunehmendem Belagverschleiß der Kugelgewindetrieb nach Beendigung eines Feststellbremszustands immer wieder eine vorbestimmte Ausgangsstellung einnimmt. Folglich wird gewährleistet, dass eine VerschleiBkompensation durch einen besonderen hierfür vorgesehenen Kompensationsmechanismus vorgenommen und eine Beeinträchtigung der Funktionsweise des Kugelgewindetriebs aufgrund einer nicht beabsichtigten Verschleißkompensation mittels des Kugelgewindetriebs unterbunden werden kann.

Eine Weiterbildung der Erfindung sieht ein Druckstück vor, das mit der Wälzkörperanordnung zusammenwirkt und an dem das Federelement angreift. Dieses Druckstück erleichtert die konstruktive Ausgestaltung der Erfindung, da eine herkömmliche Wälzkörperanordnung verwendet werden kann, die mit dem speziell für die Anbindung des Federelements ausgebildeten Druckstück in Wechselwirkung gebracht werden kann. Im Zusammenhang mit der konstruktiven Ausgestaltung und Implementierung der Erfindung unter Verwendung eines Druckstücks kann vorgesehen sein, dass dieses relativ zu der Spindel verlagerbar geführt ist. Insbesondere kann in diesem Zusammenhang vorgesehen sein, dass das Druckstück buchsenartig ausgebildet ist und in einer Aufnahmeöffnung in der Spindel aufgenommen ist. Dadurch ergibt sich eine einfach herstellbare kompakte Ausgestaltung der Anordnung.

Erfindungsgemäß kann weiter vorgesehen sein, dass die Spindel mit einer Laufrillen für die Wälzkörperanordnung aufweisenden Gewindebuchse drehfest verbunden ist. Dadurch kann die Erstellung der Spindel vereinfacht werden, weil die an sich aufwendig herzustellenden Laufrillen in einem gesonderten Bauteil angebracht werden können, das später mit der Spindel zur gemeinsamen Bewegung verbunden wird, beispielsweise durch Aufschrumpfen oder Verschrauben.

Um die Bewegung der Wälzkörperanordnung relativ zur Spindel in vorbestimmten Grenzen zu halten, sieht eine Weiterbildung der Erfindung vor, dass durch Anschlagmittel, die eine Relativbewegung der Wälzkörperanordnung relativ zu der Spindel begrenzen. Dabei sorgt der eine Anschlag dafür, dass die Wälzkörperanordnung immer wieder in die vorbestimmte Ausgangsstellung zurückkehrt, bedingt durch die Vorspannung des Federelements. Ein weiterer Anschlag kann eine maximale Auslenkung der Wälzkörperanordnung relativ zur Spindel festlegen.

Erfindungsgemäß kann die Wälzkörperanordnung eine Wälzkörperkette aufweisen. Es ist aber auch möglich, dass die Wälzkörperanordnung einen buchsenartigen Wälzkörperkäfig aufweist.

Hinsichtlich des Federelements kann vorgesehen sein, dass dieses in Form einer vorgespannten Zugfeder, einer Druckfeder oder einer Torsionsfeder ausgebildet ist. Ferner ist es möglich, eine Mehrzahl von Federelementen vorzusehen, um eine bestimmte Federcharakteristik bereitzustellen.

Die Erfindung betrifft ferner eine Kraftfahrzeugbremse, insbesondere eine elektromechanisch betätigbare Kraftfahrzeugbremse mit einem relativ zu einem Gehäuse verlagerbaren Bremsbelag, einem motorischen Antrieb und einer zwischen dem Bremsbelag und dem motorischen Antrieb angeordneten Verlagerungsmechanik, wobei die Verlagerungsmechanik einen Kugelgewindetrieb der vorstehend beschriebenen Art aufweist. Bei dieser Kraftfahrzeugbremse ist die Spindel des Kugelgewindetriebs über den motorischen Antrieb - gegebenenfalls unter Zwischenschaltung eines Getriebes - drehantreibbar.

Die Erfindung wird im Folgenden anhand der beiliegenden Figuren beispielhaft erläutert. Es stellen dar:
- Fig.1: eine Schnittansicht durch eine erfindungsgemäße Fahrzeugbremse;
- Fig.2: eine Schnittansicht entlang der Schnittlinie II-II aus Fig.1;
- Fig.3: eine Schnittansicht entlang der Schnittlinie III-III aus Fig.1;
- Fig.4: eine perspektivische Detailansicht einer Kombination aus Antriebseinrichtung und Blockiereinrichtung der Fahrzeugbremse;
- Fig.5: eine erläuternde Schnittansicht entlang der Schnittlinie V-V aus Fig.4 zum Blockiermechanismus;
- Fig.6: eine Schnittansicht entlang der Schnittlinie VI-VI aus Fig.5 zur weiteren Erläu- terung des Blockiermechanismus;
- Fig.7: eine Detailansicht der Spindel samt Spiralfeder;
- Fig.8: eine Schnittansicht zur Veranschaulichung der Spiralfeder entlang Schnittlinie VIII-VIII aus Fig.7;
- Fig.9: eine Vorderansicht auf die Spindel im Detail, wie sie auch bereits aus der Schnittansicht gemäß Fig.2 hervor geht;
- Fig.10: eine Grafik, in der die Spannkraft über den Zuspannweg hinsichtlich dem Stand der Technik und der Erfindung aufgetragen ist;
- Fig.11: eine perspektivische Längsschnittansicht eines erfindungsgemäßen Kugelge- windetriebs;
- Fig.12: eine Längsschnittansicht des Kugelgewindetriebs im Detail;
- Fig.13: eine Seitenansicht des erfindungsgemäßen Kugelgewindetriebs;
- Fig.14: eine Vorderansicht des erfindungsgemäßen Kugelgewindetriebs;
- Fig.15: eine perspektivische Ansicht des erfindungsgemäßen Kugelgewindetriebs, wobei die Mutter weggeschnitten ist;
- Fig. 16 bis 18: Darstellungen zur Erläuterung der Ansteuerung der Blockierein- richtung;
- Fig. 19: eine Längsschnittansicht einer nicht erfindungsgemäßen Ausführungsform des Kugelge- windetriebs; und
- Fig.20: eine perspektivische Ansicht des Kugelgewindetriebs gemäß Fig. 19.

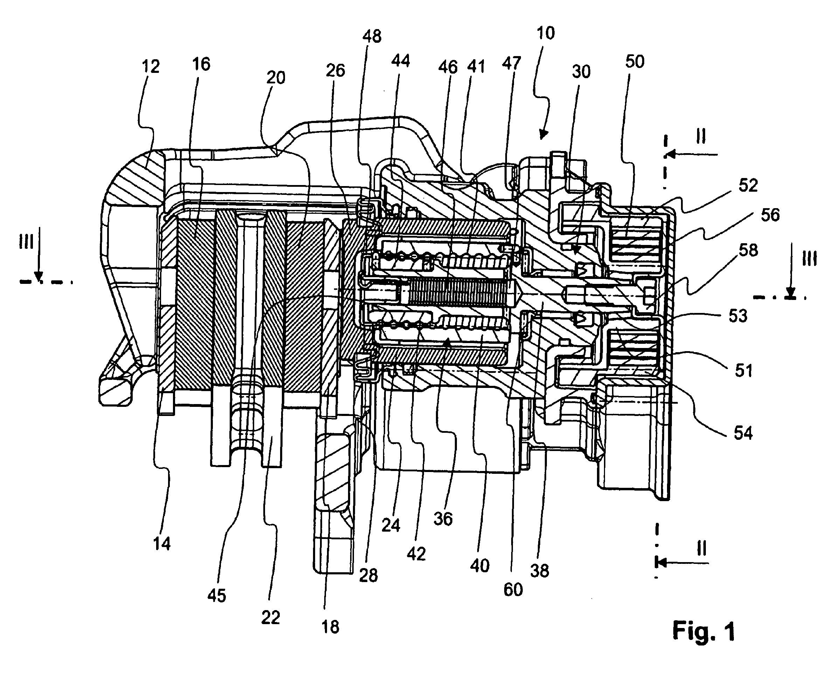

In Figur 1 ist eine erfindungsgemäße Fahrzeugbremse im Querschnitt gezeigt und allgemein mit 10 bezeichnet. Diese umfasst ein Gehäuse 12, in dem ein erster Bremsbelagträger 14 mit einem Bremsbelag 16 ortsfest gelagert ist. Ferner ist in dem Gehäuse 12 ein zweiter Bremsbelagträger 18 mit einem Bremsbelag 20 vorgesehen. Dieser zweite Bremsbelagträger 18 ist in dem Gehäuse 12 verlagerbar. Zwischen den Bremsbelägen 16 und 20 ist eine Bremsscheibe 22 angeordnet, die drehfest mit einem Kraftfahrzeugrad verbunden ist.

Zur Verlagerung des Bremsbelags 20 ist in dem Gehäuse 12 ein Kolben 24 verschiebbar aufgenommen. Dieser Kolben 24 weist an seinem linken Ende einen Kolbenabschluss 26 auf, der zur Verlagerung des Bremsbelagträgers 18 mit dem Bremsbelag 20 dient. Der Kolben 24 ist über eine Balkanordnung 28 gegenüber äußeren Einflüssen, wie Feuchtigkeit und Verschmutzung, abgedichtet.

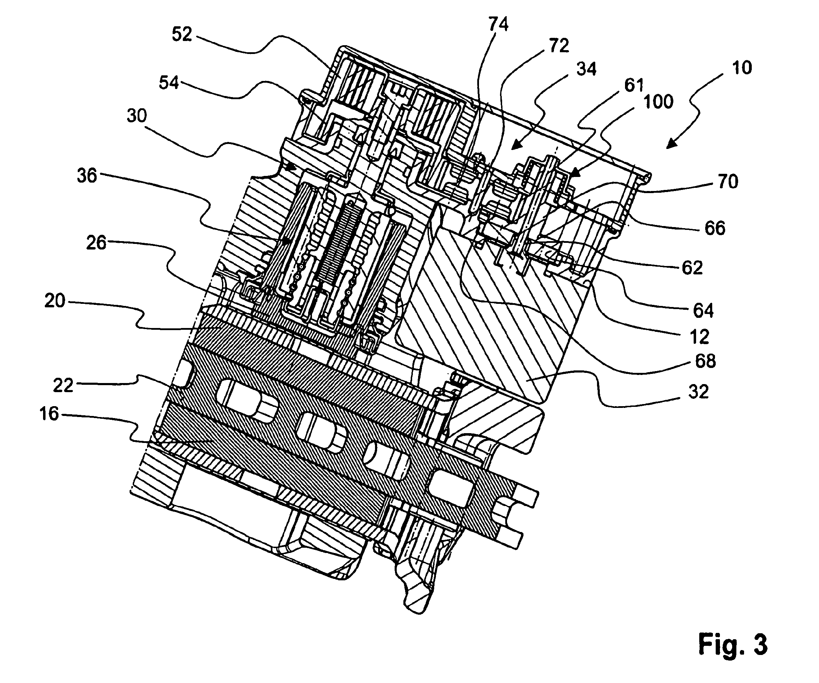

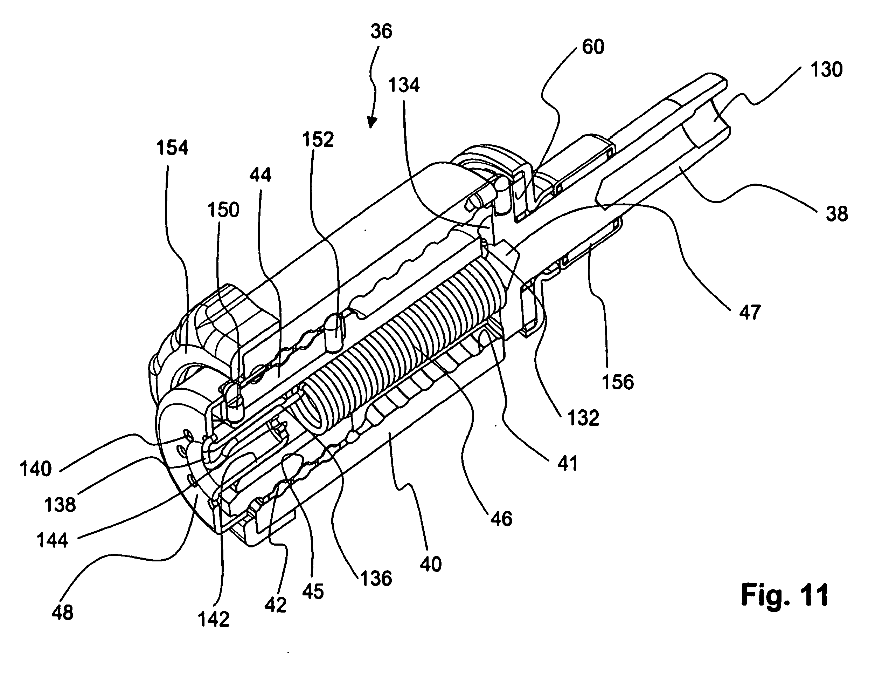

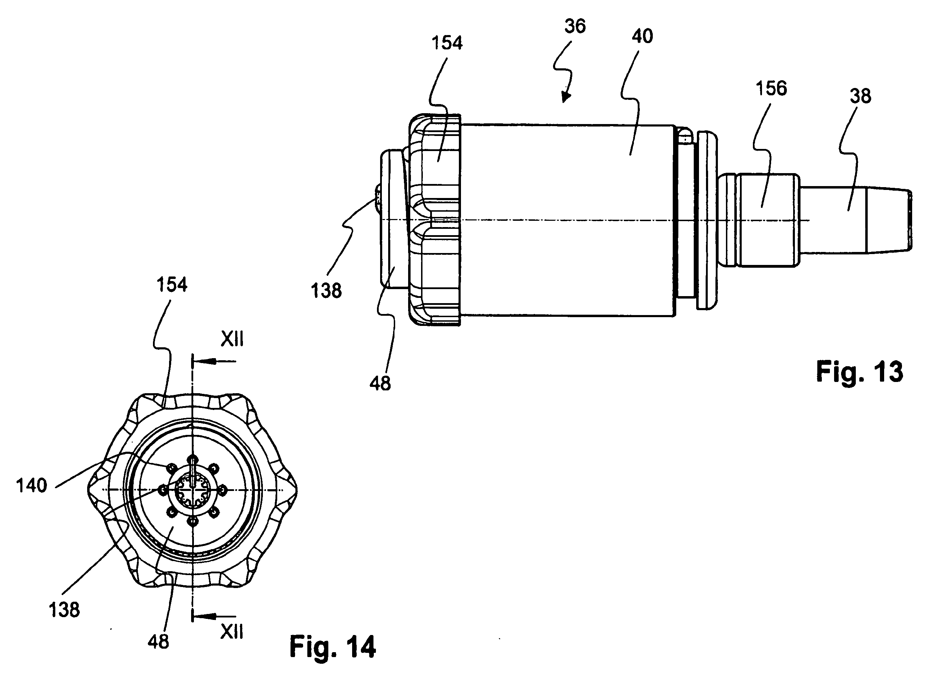

Zur Verlagerung des Bremsbelags 18 über den Kolben 24 ist eine elektromechanische Antriebsanordnung 30 vorgesehen. Diese umfasst einen Motor 32 (siehe Figur 3), der über ein im Folgenden noch näher beschriebenes Zahnradgetriebe 34 einen Kugelgewindetrieb 36 antreibt. Der Kugelgewindetrieb 36 weist eine Spindel 38 auf, die von dem Motor drehangetrieben wird. Ferner weist der Kugelgewindetrieb 36 eine Mutter 40 auf, welche um die Spindel 38 herum angeordnet ist. In der Mutter 40 sind Laufrillen 41 für eine Wälzkörperanordnung 42 vorgesehen. Die Spindel 38 weist ferner endseitig eine Gewindebuchse 44 auf, die drehfest mit der Spindel 38 verbunden ist und ihrerseits radial außenliegende Laufrillen 45 für die Wälzkörperanordnung 42 aufweist. Die Spindel 38 ist von ihrem in Figur 1 linken Ende aus mit einer zentralen Bohrung 47 versehen. In dieser zentralen Bohrung 47 ist eine Zugfeder 46 aufgenommen, die an ihrem in Figur 1 rechten Ende in der Spindel 38 drehfest gehalten ist. Mit ihrem in Figur 1 linken Ende greift die Zugfeder 46 an einem Druckstück 48 an, das seinerseits in Anlage mit der Wälzkörperanordnung 42 steht und dieses in seine in Figur 1 gezeigte Ausgangsstellung vorspannt. Im Folgenden wird auch noch mit Bezug auf die Figuren 11 bis 15 im Detail auf den Kugelgewindetrieb 36 eingegangen.

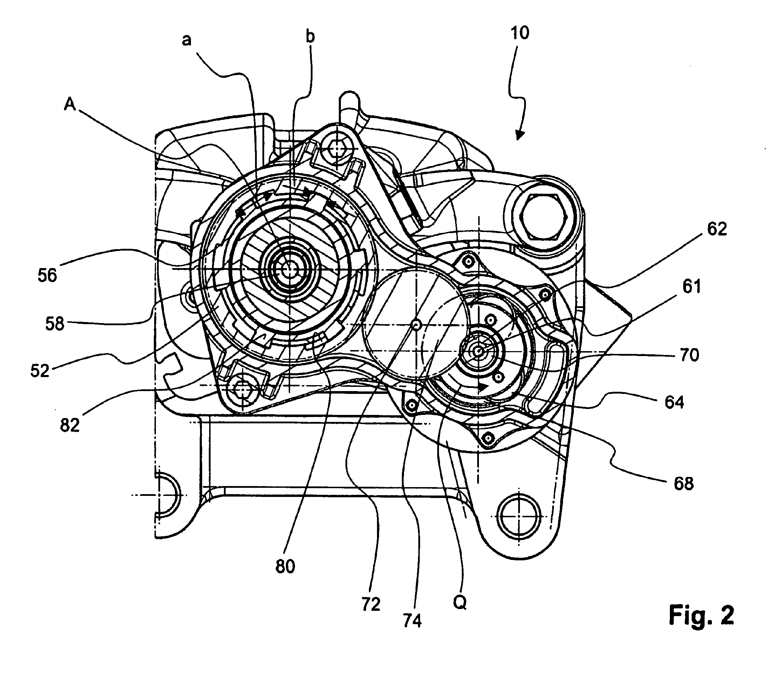

Ferner erkennt man in Figur 1 eine Spiralfeder 50, die in dem Raum zwischen einem abgestuft ausgebildeten Übertragungselement 51 und einer Aufnahmebuchse 52 unter Vorspannung aufgenommen ist. Das Übertragungselement 51 weist eine Innenverzahnung 53 auf, mit der es über eine korrespondierende Komplementärverzahnung an der Spindel 38 druckfest mit dieser verbunden ist. Die Aufnahmebuchse 52 ist hingegen relativ zur Spindel 38 und zum Übertragungselement 51 verdrehbar. Die Aufnahmebuchse 52 ist an ihrem Außenumfang mit einer Außenverzahnung 54 versehen, die mit einem Zwischenzahnrad (74, siehe Fig. 2) zum Drehantreiben der Aufnahmebuchse 52 im Eingriff steht. Die Aufnahmebuchse 52 wird in Figur 1 an ihrer rechten Seite mit einem Verschlussdeckel 56 geschlossen. Der Verschlussdeckel 56 ist über eine Spannschraube 58 drehfest mit der Spindel 38 und dem Übertragungselement 51 verbunden.

Schließlich erkennt man in Figur 1 noch ein Axiallager 60, das zur Abstützung von Axialkräften dient.

Figuren 2, 3 und 4 geben Aufschluss über die Gestaltung des Antriebs der Spindel 38. Der Motor 32 ist mit einer Ausgangswelle 61 versehen, auf der drehfest ein Zahnrad 62 angeordnet ist. Das Zahnrad 62 wirkt als Sonnenrad, mit dem Planetenräder 64 kämmen. Die Planetenräder 64 sind an einem Planetenträger 66 drehbar gelagert. Sie kämmen mit einem im Gehäuse 12 ausgebildeten Hohlrad 68, wie in einem Planetengetriebe üblich. Der Planetenträger 66 weist auch einen durchmesserkleineren außenverzahnten Schaftabschnitt 70 auf, der sich bei rotierendem Motor 32 nach Maßgabe des Übersetzungsverhältnisses des Planetengetriebes mit einer bestimmten Drehzahl dreht. Es sei angemerkt, dass der Schaftabschnitt 70 zwar auf der Motorausgangswelle 61 angeordnet und gelagert ist, jedoch relativ zu dieser verdrehbar ist.

In dem Gehäuse 12 ist ferner ein Lagerzapfen 72 gelagert, auf dem drehbar ein Übertragungszahnrad 74 angeordnet ist. Dieses treibt, wie vorstehend bereits angedeutet, die mit der Außenverzahnung 54 versehene Aufnahmebuchse 52 an. In Figur 2 erkennt man, dass die Aufnahmebuchse 52 entlang ihres Innenumfangs Ausnehmungen 80 aufweist, die sich in Umfangsrichtung über eine bestimmte Strecke a bzw. einen entsprechenden Winkel α erstrecken. An dem Verschlussdeckel 56 sind korrespondierende radiale Vorsprünge 82 vorgesehen, die sich in die Ausnehmungen 80 hinein erstrecken. Die radialen Vorsprünge 82 besitzen eine geringere Erstreckung b (bzw. Winkelerstreckung β) in Umfangsrichtung als das Maß a (α) der Ausnehmungen 80, so dass sich die Abdeckscheibe 56 relativ zu der Aufnahmebuchse 52 um die Achse A verdrehen lässt. Genauer gesagt ist eine Relativdrehbewegung um die Achse A zwischen den Komponenten 52 und 56 über die Distanz d = a - b bzw. über den Winkel δ = a - β möglich.

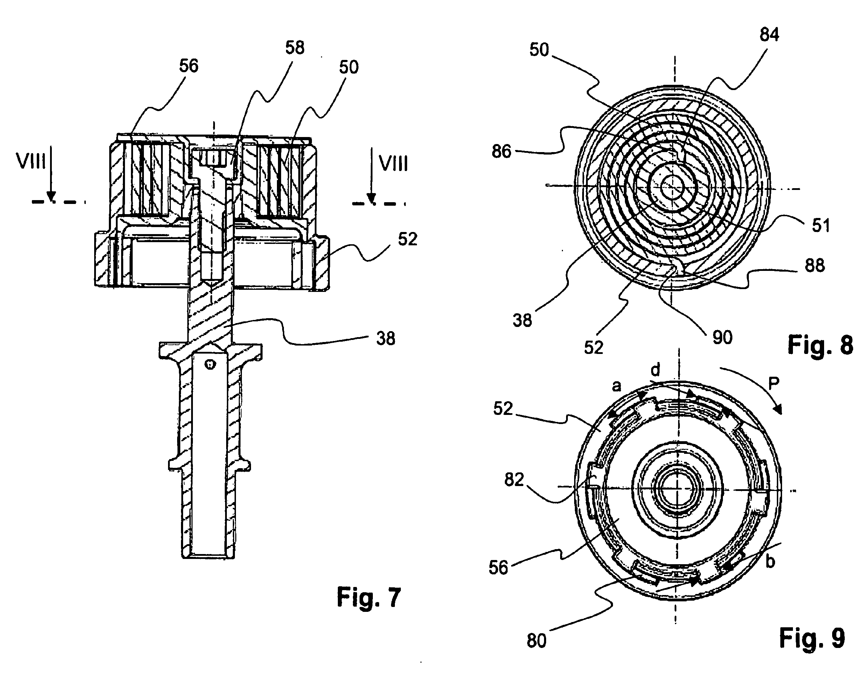

Im einzelnen ergibt sich dies auch aus der Detaildarstellung gemäß Figuren 7 bis 9. Dort erkennt man auch, dass das radial innenliegende Ende 84 der Spiralfeder 50 in dem Übertragungselement 51 drehfest aufgenommen ist. Das radial äußere Ende 88 der Spiralfeder 50 ist hingegen in einer entsprechenden radialen Bohrung 90 drehfest aufgenommen, die in der Aufnahmebuchse 52 ausgebildet ist. Die Spiralfeder 50 ist vorgespannt. Da - wie vorstehend bereits beschrieben - die Aufnahmebuchse 52 relativ zu dem Übertragungselement 51 um die Strecke d verdrehbar ist, welches wiederum über die Verzahnung 53 drehfest mit der Spindel 38 gekoppelt ist, wird in Folge eines Drehantriebs der Aufnahmebuchse 52 im Uhrzeigersinn gemäß Pfeil P (Fig. 9) die Drehbewegung über die Spiralfeder 50 auf das Übertragungselement 51 unter Erhöhung der Vorspannung der Feder übertragen und von diesem dann auf die Spindel 38. Mit anderen Worten wird bei zunehmendem Drehwiderstand an der Spindel 38 nach Erreichen einer bestimmten Zuspannkraft die Spiralfeder 50 zunehmend gespannt. Die Relativbewegung zwischen der Aufnahmebuchse 52 und dem mit der Spindel 38 drehfest verbundenen Übertragungselement 51, das gleichermaßen drehfest mit dem Verschlussdeckel 56 verbunden ist, wird durch die radialen Vorsprünge 82 und die Ausnehmung 80 auf die Strecke d bzw. den Winkel δ beschränkt.

Sobald sich die radialen Vorsprünge 82 ausgehend von der in Figur 9 gezeigten Stellung nach Durchlaufen der Strecke d an die gegenüberliegende radiale Flanke der Ausnehmungen 80 legen, erfolgt keine weitere Relativbewegung mehr und die Drehbewegung wird unmittelbar von der Aufnahmebuchse 52 auf das Übertragungselement 51 und von diesem auf die Spindel 38 übertragen. Die Spiralfeder 50 ist dann maximal vorgespannt.

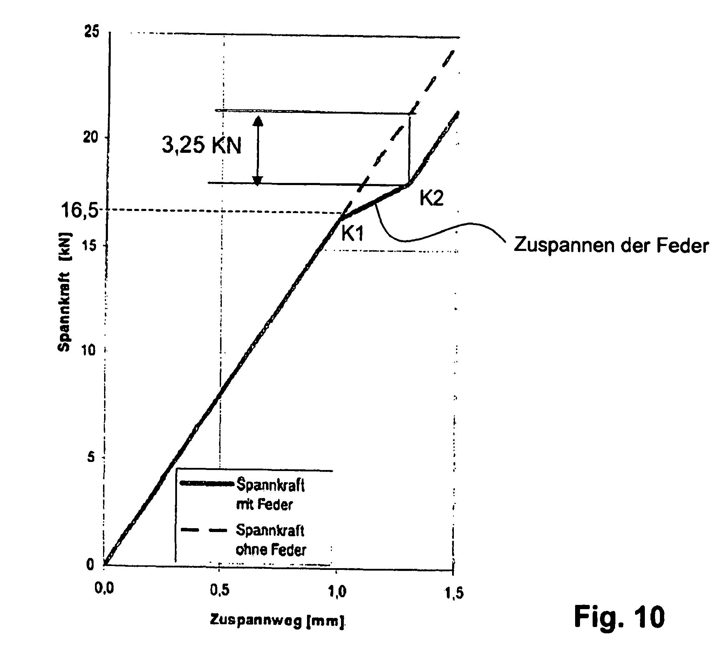

Durch die Relativbewegung um die Strecke d ist es möglich, über die Spiralfeder 50 einen Spannungszustand mit "Spannkraftreserve" an der Spindel 38 zu erreichen, die zum Ausgleich von Setzvorgängen an den Bremsbelägen 16 und 20 in Folge eines Abkühlens oder dergleichen nach Zustellen der Bremse 10 im Feststellbremsbetrieb dient. Hierzu wird im Detail noch mit Bezug auf Figur 10 eingegangen.

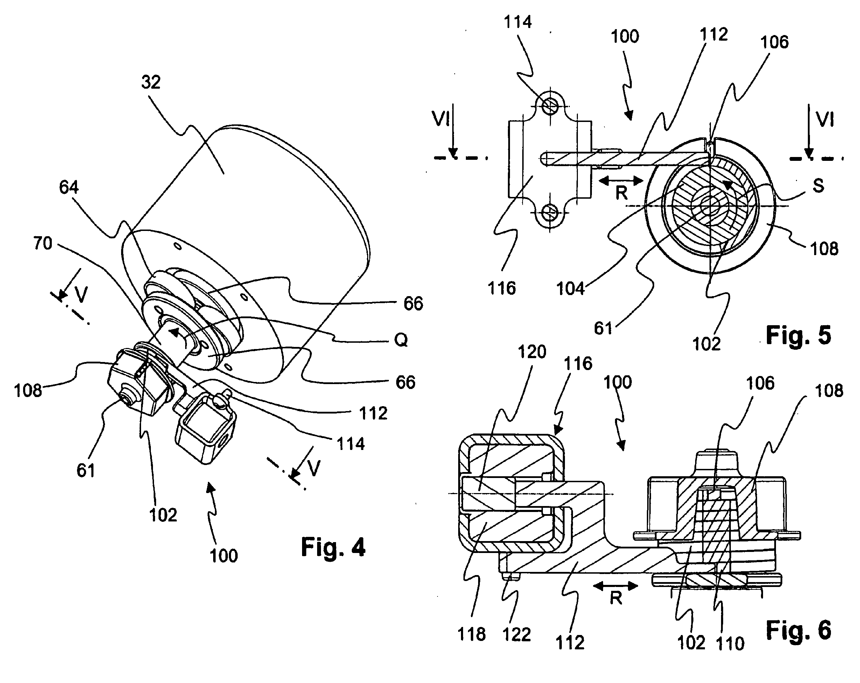

Wendet man sich noch einmal der Übersichtsdarstellung gemäß Figur 3 sowie den Einzelteildarstellungen gemäß Figuren 4 bis 6 zu, so erkennt man, dass an der Motorausgangswelle 61 auch eine Blockiereinrichtung 100 vorgesehen ist. Die Blockiereinrichtung 100 dient dazu, um im Falle einer Feststellbremsung, bei der nach Erreichen einer bestimmten Spannkraft an der Bremsscheibe 22 die Bremsbeläge 16 und 20 arretiert werden müssen, die elektromechanische Antriebsanordnung 30 zu blockieren.

Die Blockiereinrichtung 100 ist im Einzelnen auch in den Figuren 4 bis 6 gezeigt. Sie umfasst eine Schlingenfeder 102, die um einen hülsenartigen Vorsprung 104 des Schaftabschnitts 70 des Planetenträgers 66 herum mit geringem Spiel gewickelt ist. An ihrem einen Ende 106 ist die Schlingenfeder 102 drehfest in einer Abdeckkappe 108 aufgenommen. Ausgehend von diesem Ende 106 erstrecken sich mehrere aneinanderliegende Windungen aufgewickelt auf den Abschnitt 104 bis zum zweiten Ende 110. Dieses zweite Ende 110 der Schlingenfeder 102 liegt einer Stoßseite eines Hebels 112 der Blockiereinrichtung 100 gegenüber. Der Hebel 112 ist entlang des Pfeils R verschiebbar. Hierzu dient eine über Befestigungselemente 114 am Gehäuse 12 festlegbare Hubmagnetanordnung 116. Diese umfasst eine bedarfsweise bestrombare Magnetspule 118 und einen Permanentmagneten 120, der bei unbestromter Spule 118 die in Figuren 5 und 6 gezeigte Stellung einnimmt und der bei Bestromung der Spule 118 dafür sorgt, dass der Hebel 112 in Figuren 5 und 6 nach rechts verschoben wird. Der Hebel 112 ist zusätzlich über einen Führungszapfen 122 linear in Richtung R in dem Gehäuse 12 des Hubmagneten 116 geführt.

Die Blockiereinrichtung 100 wirkt wie ein Freilauf, der eine Drehung in einer Drehrichtung ermöglicht, in der anderen Drehrichtung jedoch blockiert, und der durch elektromagnetische Ansteuerung bedarfsweise derart geschaltet werden kann, dass er Drehungen in beide Drehrichtungen zulässt. Wird der Motor 32 derart drehangetrieben, dass sich das Zahnrad 70 im Gegenuhrzeigersinn gemäß Pfeil Q (siehe Figur 4 und 5) dreht, so bleibt die Schlingenfeder 102 wirkungslos. Mit anderen Worten rutscht das buchsenförmige Teil 104 relativ zur Schlingenfeder 102 durch, ohne dass diese eine Blockierwirkung zeigt. Ein solcher Drehantrieb erfolgt beispielsweise zum Zuspannen der Bremse bei einem Betriebsbremsvorgang oder bei einem Feststellbremsvorgang.

Bewegt sich nun aber das Zahnrad 70 in entgegengesetzter Richtung, was durch den Pfeil S in Figur 5 gezeigt ist, so wird das freie Ende der Schlingenfeder 110 mitgenommen. In der Folge schnürt sich die Schlingenfeder 102 zu und blockiert bereits nach kurzen Drehhub des Teils 104 jegliche weitere Drehung von diesem aufgrund der auftretenden Reibung und Umschlingung. Dadurch wird das Zahnrad 70 blockiert. Dieser Blockiereffekt kann dazu genutzt werden, um die Bremse 10 für einen Feststellbremsbetrieb nach Zuspannen auf eine bestimmte Spannkraft zu blockieren.

Um die Bremse lösen zu können, wird die Spule 118 bestromt, so dass der Hebel 112 in Figuren 5 und 6 jeweils nach rechts gemäß Pfeil R verlagert wird. Dadurch wird das freie Ende 110 der Schlingenfeder 102 relativ zu dem buchsenartigen Teil 104 derart verlagert, dass sich wieder ein Spiel zwischen der Schlingenfeder 102 und dem buchsenförmigen Teil 104 ergibt. Die enge Umschlingung des Teils 104 und die dadurch bedingte Haftreibung wird aufgehoben, so dass das Zahnrad 70 für eine Drehbewegung freigegeben werden kann.

Mit anderen Worten erlaubt die Blockiereinrichtung 100 durch Einsatz einer Schlingenfeder 102 das Blockieren einer Drehung des Zahnrads 70 in der einen Richtung und die Freigabe in der anderen Richtung. Es bleibt anzumerken, dass in einer Betriebsbremssituation selbstverständlich das Lösen der Bremse nicht durch die Blockiereinrichtung 100 behindert wird. In einer solchen Betriebsbremssituation wird der Hebel 112 durch Bestromung der Spule 118 so gestellt, dass ein Blockiereffekt der Schlingenfeder 102 dauerhaft ausbleibt.

Im Folgenden wird im Detail mit Bezug auf die Figuren 11 bis 15 der Aufbau des Kugelgewindetriebs 36 beschrieben. Man erkennt in diesen Figuren, dass die Spindel 38 in ihrem linken Bereich mit einer zentralen Bohrung 47 versehen ist und in ihrem rechten Bereich mit einer zentralen Bohrung 130. Die zentrale Bohrung 130 dient zur Aufnahme der Befestigungsschraube 58, wie vorstehend bereits geschildert. In der zentralen Bohrung 47 ist die Zugfeder 46 aufgenommen, deren rechtes Ende 132 in einer radialen Bohrung 134 im Wesentlichen drehfest und gegen unerwünschte Axialverlagerung aufgenommen ist. Die Zugfeder 46 weist einen länglichen Befestigungsbügel 136 auf, der an seinem Endabschnitt einen Befestigungshaken 138 umfasst. Mit dem Befestigungshaken 138 ist das Federelement 46 in einer von einer Mehrzahl von Aufnahmeöffnungen 140 aufgenommen, die in dem eingangs bereits erwähnten Druckstück 48 um eine zentrale Öffnung herum ausgebildet sind. Ausgehend von dieser zentralen Öffnung des Druckstücks 48 erstreckt sich in die Bohrung 47 hinein ein napfförmiger Führungsabschnitt 142, mit dem das Druckstück axial verschiebbar in der Öffnung 47 geführt ist. Der napfförmige Führungsabschnitt 142 weist an seinem axial in der Bohrung 47 liegenden Ende auch Positioniernasen 144 zur Positionierung des Federabschnitts 136 auf.

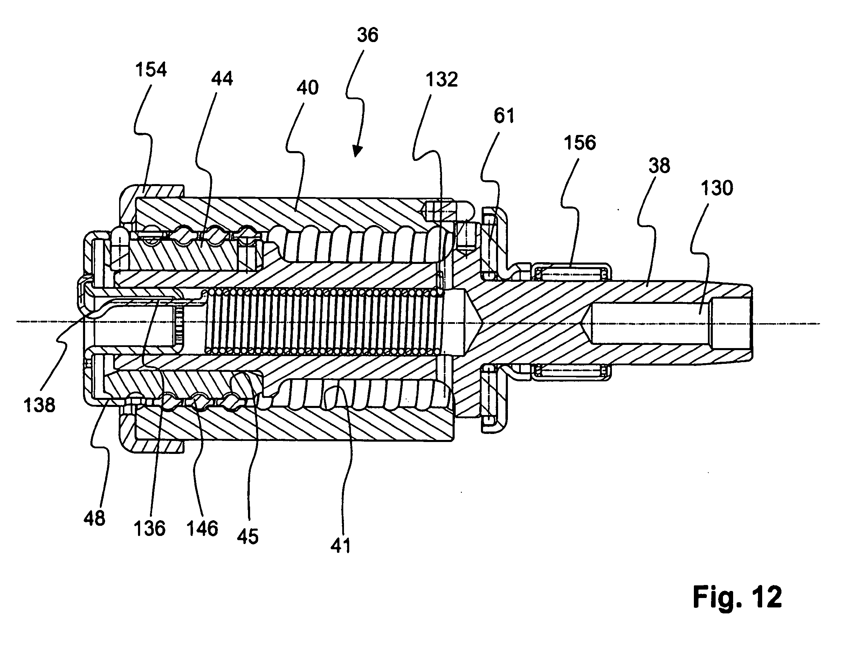

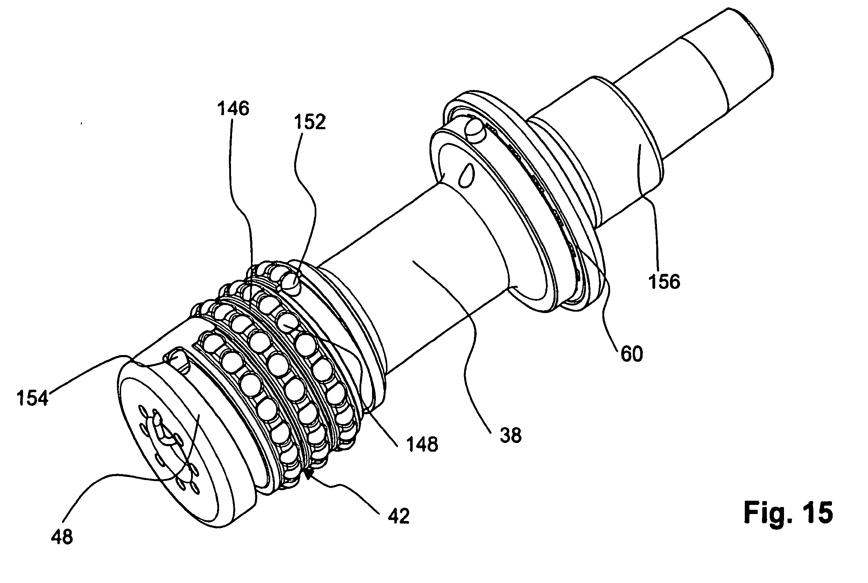

Ferner erkennt man in Figur 11, insbesondere aber in der perspektivischen Darstellung gemäß Figur 15, dass die Wälzkörperanordnung 42 von einer helixförmig verlaufenden Wälzkörperkette gebildet ist, die einen helixförmigen Käfig 146 aufweist, in dem kugelförmige Wälzkörper 148 aufgenommen sind. Wie bereits ausgeführt ist die Wälzkörperanordnung 42 in korrespondierenden Laufrillen in der Mutter 40 sowie in der Gewindebuchse 44 geführt. Die Gewindebuchse 44 umfasst zwei Anschlagstifte 150 und 152, welche die Relativbewegung zwischen der Wälzkörperanordnung 42 und der mit der Spindel 38 fest verbundenen Gewindebuchse 44 begrenzen. Das Druckstück 48 ist über das Federelement 46 in die in Figuren 11 und 12 gezeigte Ausgangsstellung vorgespannt, in der die Wälzkörperanordnung 42 an dem Anschlagstift 152 anliegt. Durch diese Vorspannung ist gewährleistet, dass die Wälzkörperanordnung 42 immer wieder in ihre in den Figuren gezeigte Ausgangsstellung zurückkehrt, wenn sie lastfrei ist. Mit anderen Worten bedeutet dies, dass beispielsweise beim Lösen eines Feststellbremszustands dann, wenn die Spannkraft abgebaut wird, das Federelement 46 schließlich die Wälzkörperanordnung 42 selbsttätig in die gezeigte Ausgangsstellung zurückgeführt.

Schließlich erkennt man in Figuren 11 und 12 noch einen sternförmigen Aufsatz 154, der drehfest auf der Mutter 40 aufgebracht ist und in dem Gehäuse 12 linear beweglich geführt ist. Mit diesem linear beweglich in dem Gehäuse geführten Aufsatz greift die Mutter 40 an dem Kolbenabschluss 26 zur Verlagerung des Bremsbelags 20 an. Ferner erkennt man noch ein Radiallager 156, mit dem die Spindel in dem Gehäuse 12 gelagert ist.

Der erfindungsgemäße Kugelgewindetrieb 36 hat den Vorteil, dass er - anders als herkömmliche Kugelgewindetriebe - keine aufwändige und raumfordernde Wälzkörper-Rückführung benötigt. Dadurch kann er in axialer Richtung sowie in radialer Richtung relativ klein dimensioniert werden. Aufgrund der jeweiligen Rückführung der Wälzkörperanordnung 42 mittels des Federelements 46 in ihre Ausgangsstellung steht nach jeder Betätigung und anschließender Rückführung stets derselbe maximale Zuspannweg zur Verfügung. Eine Verschleißkompensation erfolgt allein durch nachführende Verlagerung der Mutter 40. Anzumerken ist noch, dass eine solche Verschleißnachführung immer zwischen zwei Bremsvorgängen erfolgen kann. Auch dadurch ist gewährleistet, dass der erfindungsgemäße Kugelgewindetrieb 36 für die eigentliche Spannfunktion nur einen verhältnismäßig geringen Hub von beispielsweise 2 mm erbringen muss.

Die erfindungsgemäße Fahrzeugbremse funktioniert wie folgt:

Bei einem Betriebsbremsvorgang wird, wie vorstehend bereits beschrieben, der Motor 32 bestromt, so dass sich das Zahnrad 70 in Figur 4 im Gegenuhrzeigersinn dreht (Figur 5 im Uhrzeigersinn). Das Zahnrad 74 wird dann entsprechend angetrieben und treibt schließlich die Aufnahmebuchse 52 an. Die Drehbewegung wird über die Spiralfeder 50 auf die Spindel 38 übertragen, wobei die Spiralfeder 50 bereits derart stark vorgespannt ist, dass es bei den üblicherweise während eines Betriebsbremsvorgangs auftretenden vergleichsweise kleinen Spannkräften zu keiner Relatiwerdrehung zwischen der Aufnahmebuchse 52 und dem Übertragungselement 51 kommt. Mit anderen Worten wirkt die Spiralfeder 50 während des Zuspannens in einer Betriebsbremssituation wie ein unnachgiebiges steifes Element, so dass durch die Spiralfeder 50 bedingte Verzögerungen beim Zuspannen in einem Betriebsbremsvorgang ausbleiben.

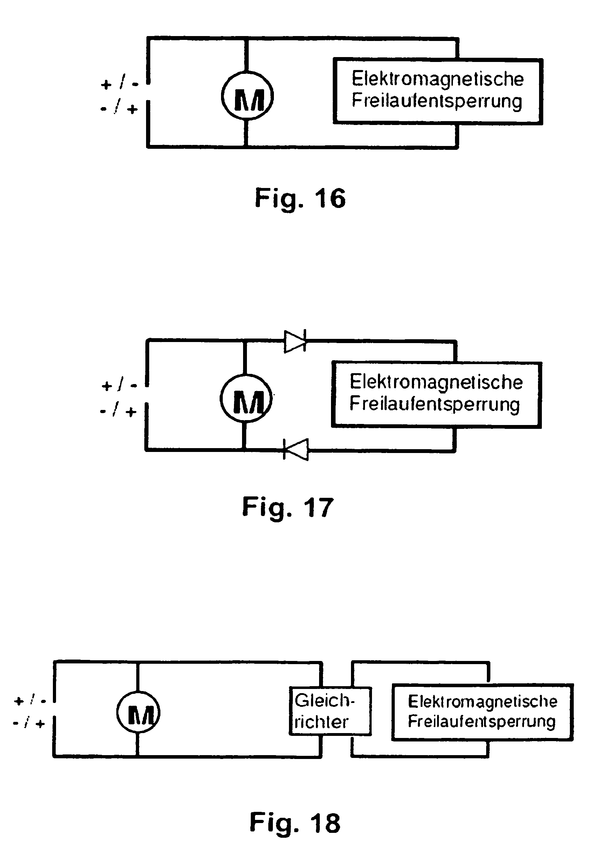

Das Zuspannen der Bremsbeläge 16 und 20 erfolgt je nach Betätigung eines Bremspedals und/oder nach Maßgabe von Fahrassistenzsystemen, wie einem Antiblockiersystem, einem Abstandshaltesystem, einer Steuerung für regeneratives Bremsen etc. Zum Lösen der Bremse während einer Betriebsbremsung wird das Zahnrad 70 entsprechend in anderer Richtung drehangetrieben. Wie vorstehend bereits im Hinblick auf die Blockiereinrichtung 110 beschrieben, kann diese während der Betriebsbremsung inaktiv gehalten werden, indem der Hebel 112 an dem freien Ende der Schlingenfeder 102 angreift und dieses relativ zum Zahnrad 70 verschiebt. Mit Bezug auf die Figuren 16 bis 18 werden jedoch andere Möglichkeiten zur Ansteuerung der Blockiereinrichtung 110 geschildert.

Bei einer Feststellbremsung ist hingegen erwünscht, ein bestimmtes Spannkraftniveau beim Zuspannen der Bremse zu erreichen und dieses auch trotz abkühlungsbedingter Setzvorgänge an den Bremsbelägen 16 und 20 dauerhaft im Wesentlichen aufrecht zu erhalten. Hierzu wird die Bremse 10 in gleicher Weise betätigt, wie vorstehend mit Bezug auf die Betriebsbremsung geschildert, jedoch mit höheren Spannkräften. Es wird zunächst ein Spannkraftniveau von beispielsweise 22 kN über den motorischen Antrieb erzielt. Man erkennt dies beispielsweise in den Graph gemäß Figur 10. Die Spiralfeder 50 ist derart vorgespannt, dass es zu einer Relatiwerdrehung zwischen Spindel 38 und Aufnahmebuchse 52 erst ab etwa 16,5 kN kommt.

Bei weiter ansteigender Spannkraft wird die Spiralfeder 50 über den Grad ihrer Vorspannung hinaus stärker zugespannt, bis schließlich das Spiel d komplett durchlaufen ist. Sodann erfolgt wiederum ein Anstieg mit steilerer Steigung. Hierdurch sind die Knickstellen K1 und K2 in der durchgezogenen Linie gemäß Figur 10 zu erklären. Mit anderen Worten gibt der Kurvenabschnitt zwischen beiden Knickstellen K1 und K2 gerade das Zuspannen der Spiralfeder 50 während eines Durchlaufens des Spiels d wieder. Nachdem der Punkt K2 erreicht wurde, wird die Bremse mit erneut steilerer Kennlinie bis zu einer Zuspannkraft von etwa 21,5 kN zugespannt, was einem Zuspannweg von insgesamt etwa 1,5 mm entspricht.

Wie allgemein bekannt ist, tritt nach Abkühlen der Bremsbeläge im Feststellbremszustand üblicherweise ein Setzvorgang auf, d.h. die Bremsbeläge ziehen sich geringfügig zusammen. Dadurch sinkt die an der Bremsscheibe anliegende Zuspannkraft ab. Es muss jedoch gewährleistet sein, dass trotz dieses Setzvorgangs immer noch eine hinreichend große Spannkraft von etwa 16,5 kN aufrecht erhalten wird, um einen zuverlässigen Feststellbremszustand zu gewährleisten. Dieser Setzvorgang kann durch die Spiralfeder 50 innerhalb gewisser Grenzen ausgeglichen werden. Mit anderen Worten wird die Spindel 38, angetrieben durch die Spannkraft der Spiralfeder 50, bei einer thermisch bedingten Schrumpfung der Bremsbeläge 16 und 20 "nachgedrückt" bzw. "nachgedreht", wobei die Spannkraft weiterhin über dem gewünschten Niveau von 16,5 kN gehalten werden kann.

Anzumerken ist noch, wie vorstehend bereits ausgeführt, dass zunächst keine Blockierung der mechanischen Antriebsanordnung 30 während der Herbeiführung des Feststellbremszustands erfolgt. Erst dann, wenn die Spannkraft von etwa 21,5 kN erreicht ist und der Motor 32 abgeschaltet wird, wird die Blockiereinrichtung 110 aktiv und verhindert eine Verdrehung des Zahnrads 70 in Richtung der Lösestellung. Die Blockiereinrichtung 110 wirkt der Art, dass sich an dieser das von der zugespannten Bremse resultierende Rückstellmoment im Stile eines blockierenden Freilaufs abstützen kann.

Zum Lösen der Feststellbremse wird dann die Spule 118 bestromt und der Hebel 112 auf das Ende 110 der Schlingenfeder 102 geschoben, so dass der Umschlingungseffekt der Schlingenfeder 102 aufgehoben wird und diese das Zahnrad 70 zur Drehung in die entspannte Stellung der Bremse wieder freigibt.

Wie vorstehend bereits angedeutet, kann die Blockiereinrichtung 110 auf verschiedene Art und Weise betrieben werden. Die Schlingenfeder 102 kann nach verschiedenen Modi in einen das Teil 104 freigebenden Zustand geschaltet werden. So ist es möglich bei jeder Motorbestomung die Spule 118 zu bestromen, um den Hebel 112 zu verschieben. Dies wird durch einen Schaltkreis erreicht, wie er in Figur 16 dargestellt ist.

Alternativ hierzu ist es möglich, nur eine stromrichtungsabhängige Bestromung der Spule 118 durchzuführen und damit eine Bestromung in Abhängigkeit von der Motordrehrichtung vorzunehmen. Mit anderen Worten wird die Blockiereinrichtung 110 nur dann Strom, wenn sich der Motor 32 in Zuspannrichtung dreht. Dies wird durch Verwendung zweier Dioden erreicht, wie in Figur 17 gezeigt.

Alternativ hierzu ist, wie in Figur 18 gezeigt, ferner der Einsatz einer Schaltung für einen Hubmagnet mit Permanentmagnetanker möglich, wobei zwischen dem Motorkreis und dem zur Ansteuerung der Blockiereinrichtung 100 dienenden Kreis ein Gleichrichter geschaltet ist.

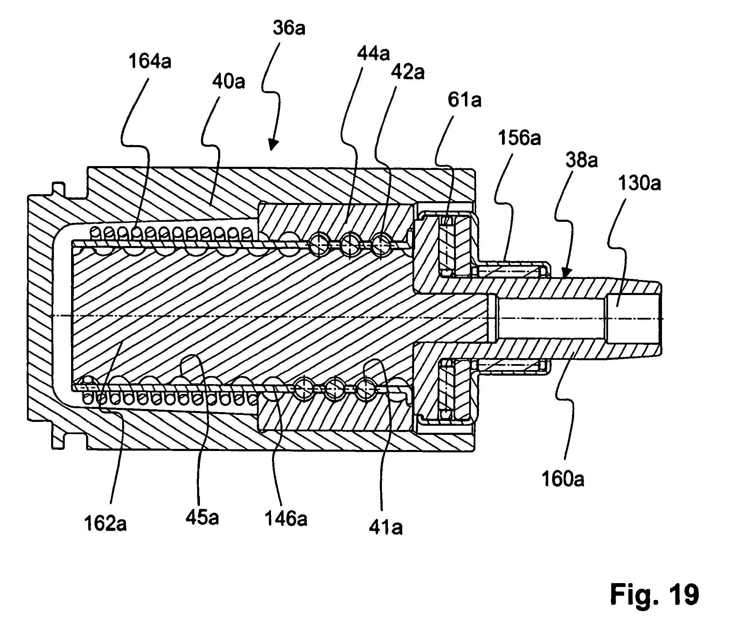

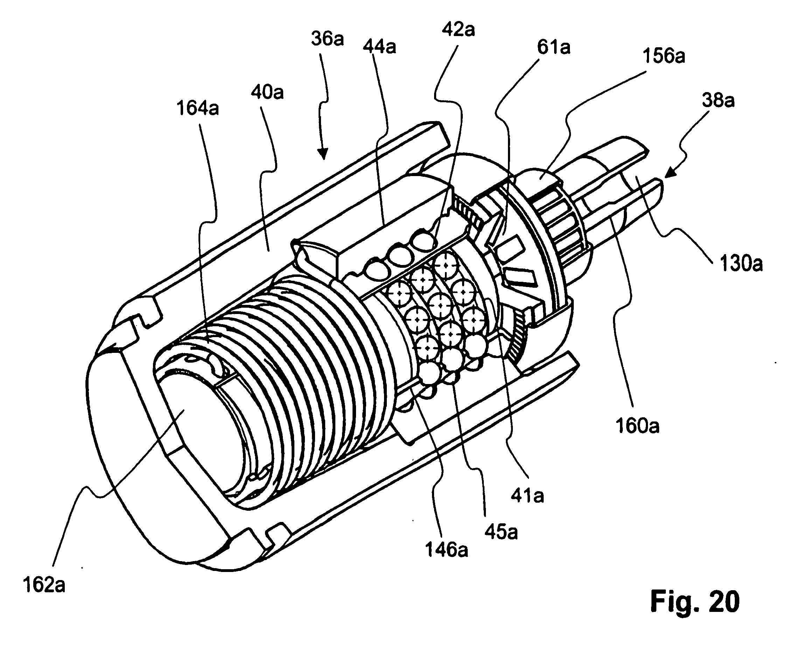

Figuren 19 und 20 zeigen eine weitere Ausführungsform für den erfindungsgemäßen Kugelgewindetrieb. Zur Beschreibung dieser weiteren Ausführungsform werden für gleichartige oder gleich wirkende Komponenten dieselben Bezugszeichen verwendet, wie bei der Beschreibung der Figuren 11 bis 15, jedoch mit dem Kleinbuchstaben "a" nachgestellt

In Fig. 19 erkennt man, dass die Spindel 38a zweiteilig ausgebildet ist, nämlich mit einem Fortsatz 160a und einem Spindelkörper 162a. Der Fortsatz 160a und der Spindelkörper 162a sind fest miteinander verschraubt. Der Spindelkörper 162a ist massiv ausgebildet und besitzt im Gegensatz zur ersten Ausführungsform gemäß Figuren 11 bis 15 keine zentrale Öffnung. An seiner Außenumfangsfläche ist der Spindelkörper 162a mit einer Laufrillenformation 45a ausgebildet. In dieser Laufrillenformation laufen die Wälzkörper der Wälzkörperanordnung 42a. Die Wälzkörper der Wälzkörperanordnung 42a sind in einem buchsenartigen Käfig 146a aufgenommen. Ferner laufen die Wälzkörper der Wälzkörperanordnung 42a in einer Gewindebuchse 44a, die fest mit der kolbenartigen Mutter 40a verbunden ist, insbesondere in diese eingepresst ist.

Auf dem Spindelkörper 162a, d.h. außerhalb des aus der Gewindebuchse 44a herausstehenden Abschnitts des buchsenartigen Käfigs 146a ist eine Druckdrehfeder 164a angebracht. Diese ist, wie man in Fig. 20 erkennen kann, mit ihrem einen abgewinkelten Ende fest in der Buchse 44a verankert und mit ihrem anderen abgewinkelten Ende fest an dem buchsenartigen Käfig 146a der Wälzkörperanordnung 42a verankert. Die Druckdrehfeder 164a sorgt dafür, dass die Wälzkörperanordnung 42a in die in Fig. 19 gezeigte Ausgangsstellung vorgespannt ist.

Der Kugelgewindetrieb 36a gemäß der nicht erfindungsgemäßen Ausführungsform nach Figuren 19 und 20 weist im Wesentlichen dieselbe Funktionsweise und damit auch dieselben Vorteile auf, wie vorstehend mit Bezug auf Figuren 11 bis 15 beschrieben. Er unterscheidet sich lediglich darin, dass die Feder 164a zwischen der Gewindebuchse 44a und der Wälzkörperanordnung angreift und dementsprechend die Wälzkörperanordnung 42a in ihre Ausgangsstellung vorspannt.

Mit der Anordnung gemäß Figuren 19 und 20 lässt sich insgesamt eine kompaktere Ausgestaltung erreichen, insbesondere lässt sich mit dieser Anordnung ein kompakter gestalteter Bremskolben erreichen.

## Patentansprüche

1. Kugelgewindetrieb (36; 36a) für eine Kraftfahrzeugbremse (10), insbesondere für eine elektromechanisch betätigbare Kraftfahrzeugbremse, mit
- einer drehantreibbaren Spindel (38),
- einer nach Maßgabe des Drehantriebs der Spindel (38) relativ zu dieser axial beweglichen Mutter (40) und
- einer Wälzkörperanordnung (42), die zwischen der Spindel (38) und der Mutter (40) angeordnet und relativ zu diesen verlagerbar ist,
wobei die Wälzkörperanordnung (42) über wenigstens ein außerhalb der Wälzkörperanordnung (42) angeordnetes Federelement (46) In eine vorbestimmte Ausgangsstellung vorgespannt ist,
**dadurch gekennzeichnet, dass** das wenigstens eine Federelement (46) innerhalb der Spindel (38) angeordnet und einenends an dieser festgelegt ist.

2. Kugelgewindetrieb (36) nach Anspruch 1,
**gekennzeichnet durch** ein Druckstück (48), das mit der Wälzkörperanordnung (42) zusammenwirkt, und an dem das Federelement (46) angreift.

3. Kugelgewindetrieb (36) nach Anspruch 2,
**dadurch gekennzeichnet, dass** das Druckstück (48) relativ zu der Spindel (38) verlagerbar geführt ist.

4. Kugelgewindetrieb (36) nach Anspruch 2 oder 3,
**dadurch gekennzeichnet, dass** das Druckstück (48) buchsenartig ausgebildet ist und in einer Aufnahmeöffnung (42) in der Spindel (38) aufgenommen ist.

5. Kugelgewindetrieb (36) nach einem der vorangehenden Ansprüche,
**dadurch gekennzeichnet, dass** die Spindel (38) mit einer Laufrille (45) für die Wälzkörperanordnung (42) aufweisenden Gewindebuchse (44) drehfest verbunden ist.

6. Kugelgewindetrieb (36) nach einem der vorangehenden Ansprüche, **gekennzeichnet durch** Anschlagmittel (150, 152), die eine Relativbewegung der Wälzkörperanordnung (42) relativ zu der Spindel (38) begrenzen.

7. Kugelgewindetrieb (36) nach Anspruch 5 und 6,
**dadurch gekennzeichnet, dass** die Anschlagmittel (150, 152) an der Gewindebuchse (44) angeordnet sind.

8. Kugelgewindetrieb (36) nach einem der vorangehenden Ansprüche,
**dadurch gekennzeichnet, dass** die Wälzkörperanordnung (42) eine Wälzkörperkette aufweist.

9. Kugelgewindetrieb (36) nach einem der Ansprüche 1 bis 7,
**dadurch gekennzeichnet, dass** die Wälzkörperanordnung (42) einen buchsenartigen Wälzkörperkäfig aufweist.

10. Kugelgewindetrieb (36) nach einem der vorangehenden Ansprüche,
**dadurch gekennzeichnet, dass** das wenigstens eine Federelement (46) In Form einer vorgespannten Zugfeder, einer Druckfeder oder einer Torsionsfeder ausgebildet ist.

11. Kraftfahrzeugbremse (10), insbesondere elektromechanisch betätigbare Kraftfahrzeugbremse, mit einem relativ zu einem Gehäuse (12) verlagerbaren Bremsbelag (20), einem motorischen Antrieb (32) und einer zwischen dem Bremsbelag (20) und dem motorischen Antrieb (32) angeordneten Verlagerungsmechanik, **dadurch gekennzeichnet, dass** die Verlagerungsmechanik einen Kugelgewindetrieb (36) nach einem der vorangehenden Ansprüche umfasst

12. Kraftfahrzeugbremse (10) nach Anspruch 11,
**dadurch gekennzeichnet, dass** die Spindel (38) des Kugelgewindetriebs (36) über den motorischen Antrieb (32) drehantreibbar ist.

13. Kraftfährzeugbremse (10) nach Anspruch 11 oder 12,
**dadurch gekennzeichnet, dass** der motorische Antrieb (32) eine Getriebeanordnung aufweist.

## Claims

1. Ball screw (36; 36a) for a motor vehicle brake (10), in particular for an electromechanically actuable motor vehicle brake, comprising
- a rotatable spindle (38),
- a nut (40) that is axially movable relative to the spindle (38) in accordance with the rotation thereof and
- a rolling body arrangement (42) that is disposed between, and displaceable relative to, the spindle (38) and the nut (40),
wherein the rolling body arrangement (42) is preloaded into a predetermined normal position by means of at least one spring element (46) disposed outside of the rolling body arrangement (42),
**characterized in that** the at least one spring element (46) is disposed inside the spindle (38) and is fastened at one end thereto.

2. Ball screw (36) according to claim 1,
**characterized by** a thrust piece (48), which interacts with the rolling body arrangement (42) and upon which the spring element (46) acts.

3. Ball screw (36) according to claim 2,
**characterized in that** the thrust piece (48) is guided displaceably relative to the spindle (38).

4. Ball screw (36) according to claim 2 or 3,
**characterized in that** the thrust piece (48) is of a bush-like construction and is accommodated in a locating opening (42) in the spindle (38).

5. Ball screw (36) according to one of the preceding claims,
**characterized in that** the spindle (38) is connected in a rotationally fixed manner to a threaded bush (44) having track grooves (45) for the rolling body arrangement (42).

6. Ball screw (36) according to one of the preceding claims,
**characterized by** stop means (150, 152) that delimit a relative movement of the rolling body arrangement (42) relative to the spindle (38).

7. Ball screw (36) according to claim 5 and 6,
**characterized in that** the stop means (150, 152) are disposed on the threaded bush (44).

8. Ball screw (36) according to one of the preceding claims,
**characterized in that** the rolling body arrangement (42) comprises a rolling body chain.

9. Ball screw (36) according to one of claims 1 to 7,
**characterized in that** the rolling body arrangement (42) comprises a bush-like rolling body cage.

10. Ball screw (36) according to one of the preceding claims,
**characterized in that** the at least one spring element (46) takes the form of a preloaded tension spring, a compression spring or a torsion spring.

11. Motor vehicle brake (10), in particular an electromechanically actuable motor vehicle brake, comprising a brake lining (20) that is displaceable relative to a housing (12), a motor drive (32), and a displacement mechanism disposed between the brake lining (20) and the motor drive (32), **characterized in that** the displacement mechanism comprises a ball screw (36) according to one of the preceding claims.

12. Motor vehicle brake (10) according to claim 11,
**characterized in that** the spindle (38) of the ball screw (36) is rotatable by means of the motor drive (32).

13. Motor vehicle brake (10) according to claim 11 or 12,
**characterized in that** the motor drive (32) comprises a gear arrangement.

## Revendications

1. Vis d'entraînement à billes (36 ; 36a) pour un frein de véhicule automobile (10), notamment pour un frein de véhicule automobile à commande électromécanique, comprenant
- une broche (38) entraînable en rotation,
- un écrou (40) déplaçable axialement par rapport à la broche (38) en fonction de l'entraînement en rotation de ladite broche et
- un ensemble de corps roulants (42) qui est placé entre la broche (38) et l'écrou (40) et peut être déplacé par rapport à ceux-ci,
ledit ensemble de corps roulants (42) étant précontraint dans une position initiale prédéfinie par au moins un élément ressort (46) placé en dehors de l'ensemble de corps roulants (42),
**caractérisée en ce que** ledit élément ressort (46) est placé à l'intérieur de la broche (38) et fixé par une des extrémités à celle-ci.

2. Vis d'entraînement à billes (36) selon la revendication 1,
**caractérisée par** une pièce de pression (48) qui coopère avec l'ensemble de corps roulants (42) et sur laquelle agit l'élément ressort (46).

3. Vis d'entraînement à billes (36) selon la revendication 2,
**caractérisée en ce que** la pièce de pression (48) est réalisée de manière à être déplaçable par rapport à la broche (38).

4. Vis d'entraînement à billes (36) selon la revendication 2 ou 3,
**caractérisée en ce que** la pièce de pression (48) est réalisée comme une douille et logée dans une ouverture réceptrice (42) aménagée dans la broche (38).

5. Vis d'entraînement à billes (36) selon l'une des revendications précédentes,
**caractérisée en ce que** la broche (38) est reliée fixe en rotation à une rainure de roulement (45) pour la douille filetée (44) présentant l'ensemble de corps roulants (42).

6. Vis d'entraînement à billes (36) selon l'une des revendications précédentes,
**caractérisée par** des moyens de butée (150, 152) qui limitent un mouvement relatif de l'ensemble de corps roulants (42) par rapport à la broche (38).

7. Vis d'entraînement à billes (36) selon les revendications 5 et 6,
**caractérisée en ce que** les moyens de butée (150, 152) sont placés sur la douille filetée (44).

8. Vis d'entraînement à billes (36) selon l'une des revendications précédentes,
**caractérisée en ce que** l'ensemble de corps roulants (42) présente une chaîne de corps roulants réalisée comme une douille.

9. Vis d'entraînement à billes (36) selon l'une des revendications 1 à 7,
**caractérisée en ce que** l'ensemble de corps roulants (42) présente une cage à corps roulants réalisée comme une douille.

10. Vis d'entraînement à billes (36) selon l'une des revendications précédentes,
**caractérisée en ce que** ledit élément ressort (46) est réalisé sous la forme d'un ressort de traction précontraint, d'un ressort de compression ou d'un ressort de torsion.

11. Frein de véhicule automobile (10), notamment un frein de véhicule automobile à commande électromécanique, comprenant une garniture de frein (20) déplaçable par rapport à un boîtier (12), un entraînement à moteur (32) et un mécanisme de déplacement placé entre la garniture de frein (20) et l'entraînement à moteur (32), **caractérisé en ce que** le mécanisme de déplacement comporte une vis d'entraînement à billes (36) selon l'une des revendications précédentes.

12. Frein de véhicule automobile (10) selon la revendication 11,
**caractérisé en ce que** la broche (38) de la vis d'entraînement à billes (36) est entraînable en rotation par l'intermédiaire de l'entraînement à moteur (32).

13. Frein de véhicule automobile (10) selon la revendication 11 ou 12,
**caractérisé en ce que** l'entraînement à moteur (32) présente un ensemble de transmission.
